# EUROPEAN PATENT SPECIFICATION

(11) **EP 3 517 896 B1**
(45) Date of publication and mention of the grant of the patent: **30.12.2020**
(21) Application number: 18154138.4
(22) Date of filing: 30.01.2018
(51) Int. Cl.: G01D 5/20, F16C 32/04

(54) **CONTACTLESS RADIAL POSITION SENSOR HAVING IMPROVED RESPONSE BEHAVIOR TO TARGET DEFECTS**
KONTAKTLOSER RADIALPOSITIONSSENSOR MIT VERBESSERTEM ANSPRECHVERHALTEN AUF ZIELDEFEKTE
CAPTEUR DE POSITION RADIALE SANS CONTACT AYANT UN COMPORTEMENT DE RÉPONSE AMÉLIORÉ AUX DÉFAUTS DE CIBLE

(43) Date of publication of application: 31.07.2019
(73) Proprietor: Mecos AG, 8005 Zürich (CH)
(72) Inventor: BÜHLER, Philipp, 8006 Zürich (CH)
(74) Representative: Detken, Andreas

(56) References cited:
- EP-A1- 0 760 087
- GB-A- 1 418 261
- US-B1- 6 534 970

## Description

### TECHNICAL FIELD

The present invention relates to a contactless electromagnetic sensor for determining a radial position of a rotor, to a transducer suitable to be used in such a contactless electromagnetic sensor, and to a corresponding method for determining a radial position of a rotor.

### PRIOR ART

Contactless electromagnetic sensors, in particular, eddy-current sensors and inductive sensors (also called reluctance sensors), are often employed for monitoring the axial, radial or angular (i.e., rotational) position of rotors suspended in a magnetic bearing device.

An eddy-current sensor normally comprises a transducer connected to excitation and processing circuitry, the transducer comprising at least one detection coil. The excitation circuitry excites a high-frequency AC current in the transducer. The high-frequency current creates an alternating electromagnetic field, which induces eddy currents in a nearby electrically conducting target on the rotor. The eddy currents damp the electromagnetic field and induce a counter electromotive force (EMF) in the transducer. These effects alter the impedance characteristics of the transducer. Such impedance changes are detected by the processing circuitry to provide an indication of the distance between the transducer and the target. An example of an eddy-current sensor system employing a single coil for excitation and detection is disclosed in US 6,664,782. This document also discusses some general problems associated with single-coil transducers.

An eddy-current sensor system that is particularly suited for determining radial displacements of a rotor is disclosed in US 7,355,501 B2. In this document, an excitation coil is wound around a cylindrical target on the rotor to create a high-frequency electromagnetic field, and a plurality of detection coils are placed near the excitation coil to detect displacements of the electromagnetic field that are caused by eddy currents induced in the target.

Inductive sensors employ a target with high magnetic permeability, e.g. a ferromagnetic or ferrimagnetic target. The operating frequency of inductive sensors is generally lower than for eddy-current sensors, often in the range of a few kHz only.

GB 1 418 261 A discloses an inductive sensor for detecting radial displacements of a rotor in a magnetic bearing device. A plurality of pairs of radial displacement detectors are fixed to a stator and are coupled together and relatively spaced such that the signals from adjacent detectors are averaged to eliminate the effects of dimensional variations in the radius of the rotor.

In the following, eddy-current sensors and inductive sensors will collectively be designated as contactless electromagnetic sensors.

Many possibilities are known in the art for connecting the detection coil(s) of a contactless electromagnetic sensor to its excitation and processing circuitry. One example is provided in WO 2015/052016 A1. This document discloses a contactless electromagnetic sensor device that comprises two detection coils arranged in a bridge circuit together with two windings of an input or output transformer so as to separate excitation and detection.

It has also been proposed in the art to employ a contactless electromagnetic sensor for determining the angular position of a rotor. For instance, US 2017/0292857 discloses a contactless electromagnetic sensor arrangement that comprises a disc-shaped target coupled to the rotor, the target including at least two metal surfaces that influence the inductances of flat detection coils due to eddy current effects as a function of the degree of overlap. The sensor arrangement comprises an evaluation unit that generates sinusoidal evaluation signals. This sensor arrangement can only be used for determining the angular position of the rotor; it is unsuitable for determining a radial position.

US 9,470,505 discloses another contactless electromagnetic sensor for determining the angular position of a rotor. Coils are arranged relative to the rotation axis so that signals are generated that vary sinusoidally with the angular position of the rotor. Also this sensor is unsuitable for determining a radial position of the rotor.

Monitoring the radial positions of a rotor is of particular importance if the rotor is suspended by active magnetic bearings, because radial position information is needed for controlling the magnetic bearings. When contactless electromagnetic sensors are employed for determining the radial positions of a rotor, it is important that the target is rotationally symmetric about the rotation axis to a high degree of precision. Any deviations from perfect rotational symmetry, such as deformations, notches, scratches or dents, will cause additional disturbance signals at the sensor output, which can lead to undesired control signals for the magnetic bearings, resulting in a jolty movement of the rotor.

### SUMMARY OF THE INVENTION

In a first aspect, it is an object of the present invention to provide a contactless electromagnetic sensor for monitoring a radial position of a rotor, the sensor exhibiting well-defined response behavior to target imperfections, thereby enabling improved compensation for disturbance signals resulting from such target imperfections.

This object is achieved by a contactless electromagnetic sensor as defined in claim 1. Further embodiments of the invention are laid down in the dependent claims.

Accordingly, a contactless electromagnetic sensor is provided for determining a radial position of a rotor configured for rotation about a longitudinal axis. The sensor comprises:
a first transducer comprising one or more first coils;
excitation circuitry connected to the first transducer to energize the first transducer, (in particular, to directly or indirectly energize the first coils by a dynamic excitation current); and
processing circuitry for receiving transducer signals from the first transducer (in particular, directly or indirectly from the first coils), and for deriving at least one position signal indicative of a radial position of the rotor based on the transducer signals,
wherein the first coils of the first transducer have a sensitivity to a target material that varies sinusoidally along a circumferential direction about the longitudinal axis.

Depending on the type of sensor, the target material to which the coils exhibit sinusoidal sensitivity can be electrically conducting (in the case of an eddy-current sensor) or ferro-/ferrimagnetic (in the case of an inductive sensor).

By providing a transducer comprising coils that have sinusoidal dependence of sensitivity along the circumferential direction upon the presence of a target material, any deviation of the target from perfect rotational symmetry will lead to a rotor-synchronous sinusoidal disturbance signal, regardless of the size and shape of the deviation from rotational symmetry. This can be easily seen by considering a single narrow notch-like defect at one single angular position on the target surface. Because of the sinusoidal sensitivity distribution, such a defect will lead to a rotation-synchronous, sinusoidal disturbance signal whose amplitude is determined by the size of the defect, and whose phase is determined by the angular position of the defect. Any deviation of the target surface from perfect rotational symmetry can be approximated as a superposition of such narrow individual defects, and the resulting disturbance signal will be a superposition of the sinusoidal disturbance signals of the individual defects. Mathematically speaking, the resulting disturbance signal is a convolution of the angular distribution of the defects with the angular sensitivity distribution of the coils. The resulting disturbance signal is sinusoidal and rotor-synchronous, having the same form as an unbalance signal. The disturbance signal can therefore be easily compensated very much like an unbalance signal. Specifically, in the context of active magnetic bearing devices, such compensation can be carried out without negative impact on the control of the magnetic bearings.

Methods for compensating unbalance signals are well known in the art. An overview over such schemes is provided, e.g., in G. Schweitzer et al. (ed.), "Magnetic Bearings - Theory, Design and Application to Rotating Machinery" (2009), ISBN 978-3-642-00497-1, chapter 8.3. In particular, this document discloses three groups of unbalance control strategies. One of these groups involves a cancellation or rejection of rotor-synchronous disturbance signals. An example is "Unbalance Force Rejection Control" (UFRC) as discussed in chapter 8.3.3 of the above-mentioned document. When UFRC is applied, the rotor will rotate in the magnetic bearing device essentially without being influenced by rotor-synchronous disturbance signals.

In summary, by providing a radial position sensor comprising a transducer that has sinusoidal response behavior with respect to deviations of the target from perfect rotational symmetry, it becomes possible to more easily compensate for the disturbance signals resulting from such deviations.

In the context of the present invention, a sensitivity distribution *S*(*φ*) (describing the dependence of sensitivity *S* to the local presence of a target material as a function of angular position *φ*) is considered to be sinusoidal if it can be well approximated by a lowest order cosine approximation *S*(*φ*) ≈ *S*₀ + *S*₁ · cos(*φ* - *φ*₁), wherein *S*₀ is an offset (preferably zero), *S*₁ is the amplitude and *φ*₁ is the phase of the lowest order cosine approximation. Note that the periodicity of the lowest order cosine approximation is 360°. To be more precise, a sensitivity distribution is considered to be sinusoidal if it can be expanded into a Fourier series $S \left(ϕ\right) = {S}_{0} + {\sum }_{n = 1}^{∞} {S}_{n} cos \left[nϕ-{ϕ}_{n}\right] ,$ wherein *Sₙ* is the real-valued nth Fourier coefficient and *φₙ* is the corresponding phase, and if all coefficients *Sₙ* for *n* > 1 have an absolute value that is less than 20%, preferably less than 10% of the absolute value of the first coefficient *S*₁.

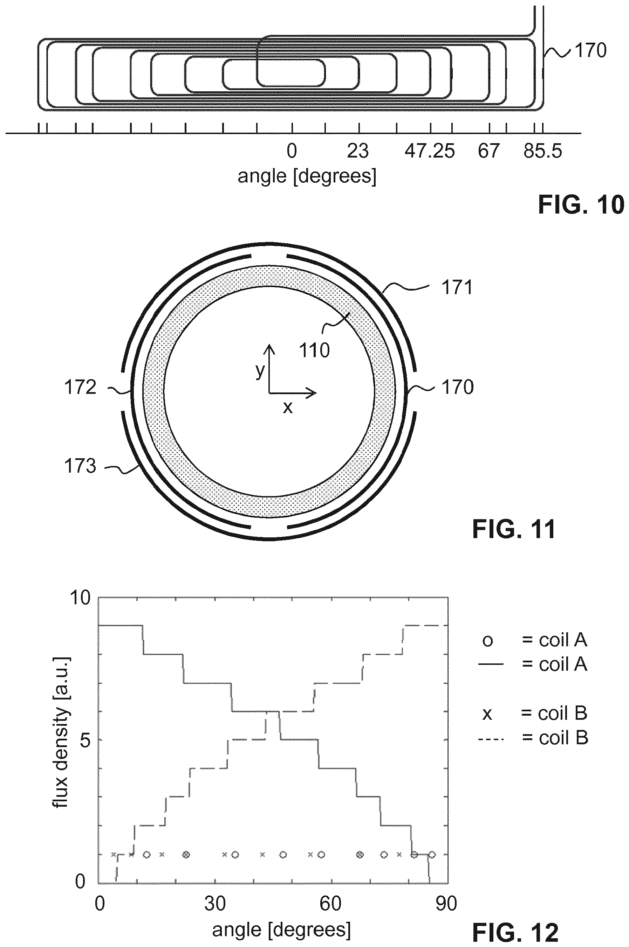

In order to generate a sinusoidal sensitivity distribution, each first coil can comprise a plurality of differently sized, overlapping conductor loops, and the conductor loops can be arranged so as to result in a sinusoidal sensitivity distribution of said coil. Suitable arrangements of the conductor loops can easily be derived from numerical simulations of the field generated by an AC current through the conductor loops and of the resulting induced voltages, as will be discussed in more detail below in conjunction with Figs. 10-13.

In advantageous embodiments, the first coils together define a sensitivity distribution that is sinusoidal over the entire circumference of the rotor, i.e., it can be well approximated by the lowest order cosine approximation over the entire angular range from 0° to 360°. This can be achieved by distributing the windings of the first coils essentially over the entire circumference.

Preferably the transducer comprises exactly two first coils arranged at an angular distance of 180°, the resulting sensitivity distribution being sinusoidal over the entire circumference of the rotor, each coil thus essentially covering a 180° range. In order to create the sinusoidal sensitivity distribution, it is preferred that each first coil comprises at least one conductor loop that extends over an angular range of at least 150°, more preferably at least 165°, but not more than 180°, about the rotation axis.

In principle, the first coils of the transducer can have arbitrary orientation in space. However, it is advantageous if the first coils define an active coil surface whose surface normal has a radial component. To be more precise, it can be advantageous if the conductor loops of each first coil are arranged in or parallel to a curved coil surface that defines at least one normal vector having a radial component with respect to the longitudinal axis. In advantageous embodiments, the curved coil surface is of cylindrical shape and extends circumferentially around the longitudinal axis, thus defining a set of normal vectors that are all radial. The first transducer can thus be configured to interact with a first target portion of the rotor which defines a cylindrical target surface. The target surface can be arranged on an inner circumference of the rotor in case of an external rotor, or on an outer circumference in case of an internal rotor. In this manner, the coupling between the coil and the first target portion will be essentially radial. In such embodiments, the first coils can be designed to require only very limited axial space by making the first coils long and narrow if viewed along the circumferential direction. In particular, each first coil can have a dimension along the longitudinal axis that is at most 20% of its radius of curvature about the longitudinal axis.

In advantageous embodiments, the contactless electromagnetic sensor is an eddy-current sensor. To this end, the first target portion of the rotor should be electrically conducting, in particular, metallic. The excitation circuitry can be configured to energize the first transducer in such a manner that eddy currents are induced in the first target portion of the rotor, and the processing circuitry can be configured to take the influence of the eddy currents onto the transducer signals into account when deriving the at least one position signal. In particular, the excitation circuitry can be configured to feed an AC current having an excitation frequency of at least 100 kHz to the first transducer.

In other embodiments, the sensor can be an inductive sensor. The first target portion will then have high magnetic permeability (relative permeability, e.g., above 10, preferably above 100), i.e., it will be ferro- or ferrimagnetic, and the excitation frequency of the sensor will generally be well below 100 kHz. As it is well known in the art, the effects of a high-permeability target upon the impedance of the transducer will generally be different from the effect of eddy currents in a conducting target, and therefore the signal processing carried out by the processing circuitry in deriving a radial position signal will generally be different between an eddy-current sensor and an inductive sensor. For instance, if the processing circuitry determines the impedance of the first coils, different linear combinations of the real and imaginary parts of the impedance may be computed for eddy-current sensors and for inductive sensors in deriving the position signal.

The first transducer can further comprise one or more (in particular, two) second coils, wherein the second coils also have sinusoidal sensitivity to the target material along the circumferential direction, and wherein the sensitivity distribution of the second coils has the same periodicity as the sensitivity distribution of the first coils, but is shifted relative to the latter along the circumferential direction, i.e., the sensitivity distribution of the second coils has a different phase than the sensitivity distribution of the first coils. In particular, the sensitivity distribution of the second coils can be shifted by an angle that is different from 0° or 180°, in particular by an angle between 30° and 150°, more particularly between 60° and 120°, and advantageously by 90° or 120° relative to the sensitivity distribution of the first coils. In this manner, it becomes possible to determine radial positions along at least two different radial directions, in particular, radial positions along two mutually orthogonal radial directions (e.g., "x" and "y"), with a single transducer requiring only a short axial length. Accordingly, the processing circuitry can be configured to derive position signals that are indicative of at least two radial positions of the rotor along at least two different radial directions, based on transducer signals from the first and second coils.

The transducer can further comprise one or more (in particular, two) third coils, wherein the third coils also have sinusoidal sensitivity to a target material along the circumferential direction, and wherein the sensitivity of the third coils varies with the same periodicity as the sensitivity distribution of the first and second coils, but is shifted relative to the latter along the circumferential direction, i.e., the sensitivity distribution of the third coils has a different phase (direction) than the sensitivity distribution of the first and second coils. In particular, it is advantageous to shift the sensitivity distributions of the second and third coils by 120° and 240°, respectively, relative to the first coils. In this manner, it is possible to carry out measurements along three different radial directions that are equally spaced along the circumferential direction. It is straightforward to derive radial positions along two mutually orthogonal directions (e.g., "x" and "y") from such measurements. The inherent redundancy of such measurements can be used to carry out plausibility checks and/or to determine faulty measurements or other defects with increased reliability.

Of course, this scheme can be generalized to arrangements involving a yet larger number of coils.

The first coils can overlap with the second and possibly third coils. The first, second and possibly third coils can thus be strongly coupled. It should be noted that these couplings will generally also influence the sensitivity distributions of the first, second and possibly third coils, i.e., the coil layouts of the first, second and possibly third coils generally cannot be optimized independently of each other. However, as will be explained in more detail below in conjunction with Figs. 10-13, it is straightforward to take the couplings between these coils into account during layout optimization if all coils are operated at the same frequency. It is therefore advantageous for the processing circuitry to detect transducer signals originating from the first, second and possibly third coils at the same detection frequency.

The contactless electromagnetic sensor can further comprise a second transducer arranged at a different axial position than the first transducer. The second transducer can be used, e.g., for carrying out measurements of another quantity like the angular position of the rotor or for differential measurements. It is advantageous if the second transducer comprises one or more (first and possibly second) coils dimensioned and arranged in a similar manner as the (first and possibly second) coils of the first transducer. In particular, the second transducer can comprise one or more (in particular, two) first coils that have a sensitivity to a target material that varies sinusoidally along the circumferential direction. Preferably, the sensitivity distributions of the first coils of the first and second transducers are essentially identical or at least similar, in particular, these distributions have the same periodicity along the circumferential direction, and preferably, they also have the same phase about the longitudinal axis, i.e., they are not shifted relative to each other along the circumferential direction. The second transducer can further comprise one or more (in particular, two) second coils that also have a sensitivity to the presence of a target material that varies sinusoidally along a circumferential direction, the sensitivity distribution of the second coils having the same periodicity as the sensitivity distribution of the first coils of the second transducer, but shifted relative to the sensitivity distribution of said first coils along the circumferential direction, preferably by the same amount as in the first transducer.

The second transducer can be arranged immediately axially adjacent to the first transducer, and the first and second transducers can be axially separated by an electrically conducting shielding member, the shielding member preferably being ring-shaped.

In some embodiments, the second transducer may be configured to determine an angular (rotary) position of the rotor about the longitudinal axis. To this end, the coils of the second transducer may be configured to couple with a second target portion of the rotor, the second target portion being rotationally asymmetric (eccentric), and the processing circuitry may be configured to receive transducer signals from the first and second transducers and to determine position signals indicative of at least one radial position and an angular position of the rotor based on the transducer signals, in particular, by correlating the transducer signals of the first and second transducers.

In other embodiments, the second transducer may act as a reference for differential measurements. To this end, the contactless electromagnetic sensor may further comprise a reference target that is unaffected by the position of the rotor, and the coils of the second transducer may be arranged to couple with said reference target. The processing circuitry may be configured to receive signals from the first and second transducers and to carry out a compensation of the sensor signals of the first transducer based on signals of the second transducer. In particular, the processing circuitry may be configured to receive transducer signals from the first and second transducers and, based on the transducer signals, to determine position signals that are indicative of at least one radial position of the rotor and diameter signals that are indicative of a diameter of the target, wherein the position signals may be compensated for variations of the diameter of the target.

In some embodiments, the reference target is a ring arranged in a fixed spatial relationship to the coils of the second transducer. Depending on whether the rotor is an internal or external rotor, the reference target may be arranged on an inner or outer circumference of the second transducer.

In a second aspect, the present invention provides a transducer that is specifically adapted to be employed in a contactless electromagnetic radial position sensor as described above. The transducer comprises:
an annular coil support, the annular coil support defining a longitudinal axis; and
one or more (in particular, two) first coils mounted on the annular coil support.

The first coils are arranged in or parallel to a curved coil surface that defines at least one normal vector having a radial component with respect to the longitudinal axis, thus making the transducer specifically adapted to determine radial position. The first coils further have a sensitivity to a target material that varies sinusoidally along the circumferential direction, as discussed above, thereby facilitating compensation of any disturbance signals that may result from target imperfections.

While the transducer is advantageously used for determining radial position, its use is not limited to this purpose. In particular, the transducer can instead be used for determining angular position of an eccentric target, as explained above. In this case, the sinusoidal sensitivity variation of the first coils can lead to improved angular resolution.

As already discussed above, the transducer may further comprise one or more second (and possibly further) coils mounted on the annular coil support, the second coils also being arranged in or parallel to the curved coil surface and having a sensitivity to a target material that varies sinusoidally along the circumferential direction. The sensitivity distributions of the first and second coils then preferably have identical periodicity, but are shifted relative to each other along the circumferential direction by an angle different from 0° or 180°, in particular by an angle between 30° and 150°, more particularly between 60° and 120°, and advantageously by 90° or 120°.

For mounting the first and possibly second and further coils, the annular coil support may define a plurality of slots that are open towards an inner or outer circumference of the annular coil support, the first and second coils being formed by wires that are received in the slots. In some embodiments, the coil support is produced by 3D printing. 3D printing is advantageous as it minimizes tooling costs and at the same time permits the creation of complicated structures such as the slots required to accommodate the wires of the coils. Alternatively, the coil support can be produced by more traditional methods, like injection molding.

For simplifying manufacture of the coil support, the annular coil support may comprise a plurality of coil support segments, each coil support segment extending over an angular range of 180° or less, preferably 90° or less, in particular 45°. At least two of the coil support segments can be identical.

The transducer can further comprise two electrically conducting annular end plates disposed on both sides of the annular coil support, these end plates act as electromagnetic shielding members.

In some embodiments, the transducer comprises a flexible printed circuit board, at least some of the coils of the transducer being formed as printed coils on said flexible printed circuit board.

In a third aspect, the present invention provides a method of determining a position of a rotor, in particular, a radial position, the method comprising:
providing a rotor for rotation about a longitudinal axis, the rotor comprising a target portion;
providing a transducer comprising one or more coils that have a sensitivity that varies sinusoidally along a circumferential direction, the coils being arranged to couple with the target portion of the rotor,
feeding a dynamic current to the transducer so as to generate a dynamic electromagnetic field in the target portion of the rotor;
receiving transducer signals from the transducer; and
deriving at least one position signal indicative of a position of the rotor based on the transducer signals.

In particular, the method can be carried out with the sensor of the first aspect of the present invention. The transducer can be the transducer of the second aspect of the present invention, and all considerations discussed in conjunction with the first and second aspects also apply to the method of the third aspect.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows, in a perspective view, a transducer assembly for an eddy-current position sensor according to a first embodiment of the present invention;
- Fig. 2: shows the transducer assembly of Fig. 1 in a plan view;
- Fig. 3: shows the transducer assembly of Fig. 1 in a side view;
- Fig. 4: shows the transducer assembly of Fig. 1 in a cross-sectional view in plane A-A in Fig. 2;
- Fig. 5: shows the transducer assembly of Fig. 1 in a cross-sectional view in plane B-B in Fig. 2;
- Figs. 6-9: show four different coil support segments of the transducer assembly of Fig. 1;
- Fig. 10: shows a schematic illustration of a coil that exhibits a sinusoidal sensitivity distribution over a range of approximately 180°;
- Fig. 11: shows a highly schematic sketch illustrating the arrangement of first and second coils on a coil support;
- Fig. 12: shows a diagram illustrating the flux densities generated by two overlapping coils as a function of angular position when identical DC currents are fed through both coils; circles and crosses indicate the positions of the turns of each coil, and solid and broken lines indicate flux density generated by each coil;
- Fig. 13: shows a diagram illustrating the voltage contributions induced in each of the overlapping coils as a result of the time-dependent local flux that is generated at each angular position when identical AC currents are fed through both coils;
- Fig. 14: shows a diagram illustrating the resulting sensitivity distribution over the entire angular range from 0° to 360°;
- Fig. 15: shows a schematic sketch illustrating a sensor that is capable of determining both a radial position along the x axis and an angular position;
- Fig. 16: shows, in a perspective view, a transducer assembly according to a second embodiment of the present invention;
- Fig. 17: shows a schematic sketch illustrating a sensor that is capable of determining both a radial position along the x axis and the diameter of the target;
- Fig. 18: shows, in perspective view, a coil support of a transducer assembly according to a third embodiment of the present invention;
- Fig. 19: shows a schematic sketch illustrating a flexible printed circuit board carrying two coils for a transducer assembly according to a fourth embodiment of the present invention.

### DESCRIPTION OF PREFERRED EMBODIMENTS

### First embodiment

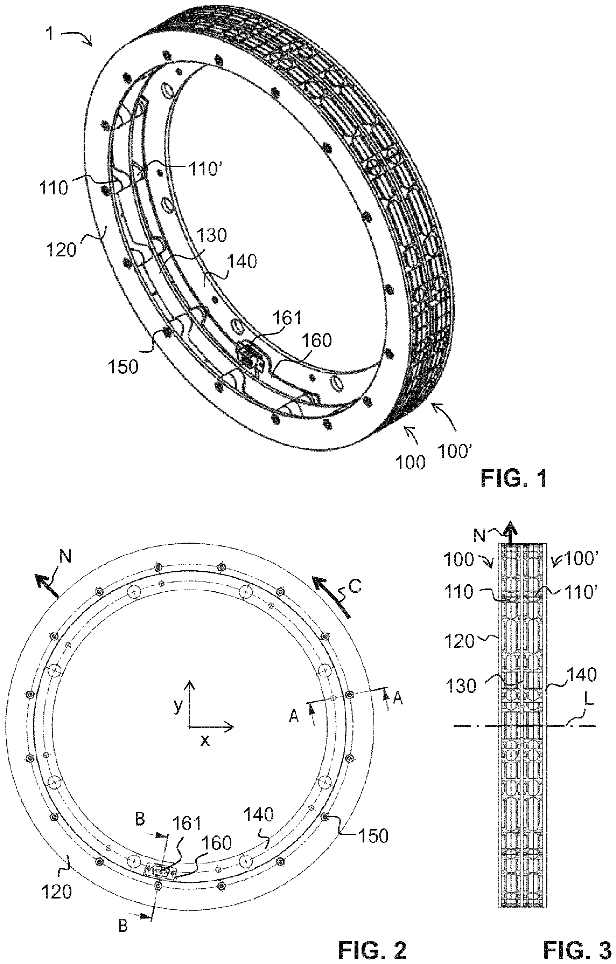

A transducer assembly 1 according to a first embodiment of the present invention is illustrated in Figures 1-5. The transducer assembly 1 is configured to determine the radial position of a hollow external rotor (not illustrated in Figs. 1-5) that radially surrounds the transducer assembly 1. Accordingly, the transducer assembly 1 is configured to interact with target surfaces on the inner circumference of the hollow rotor.

The transducer assembly 1 comprises a first transducer 100 and a second transducer 100'. Each transducer 100, 100' comprises an annular coil support 110, 110'. The annular coil supports 110, 110' define a common longitudinal axis L (Fig. 3). At the one axial end, the transducer assembly 1 comprises an electrically conducting annular bottom plate 120. The transducers 100, 100' are separated by an electrically conducting shielding ring 130. At its other axial end, the transducer assembly comprises an electrically conducting annular top plate 140. Between the coil support 110' of the second transducer 100' and the top plate 140, a connector board 160 in the form of a rigid printed circuit board (PCB) is disposed, which carries a standard connector 161 for connecting the transducer assembly 1 to excitation and processing circuitry. The various parts of the transducer assembly 1 are held together by a plurality of screws 150 extending parallel to the longitudinal axis L.

Each coil support 110, 110' carries two first coils and two second coils (not shown in Figs. 1-5), which will be explained in more detail in conjunction with Figs. 10 and 11. Each coil consists of several loops of an insulated conducting wire (e.g., coated copper wire).

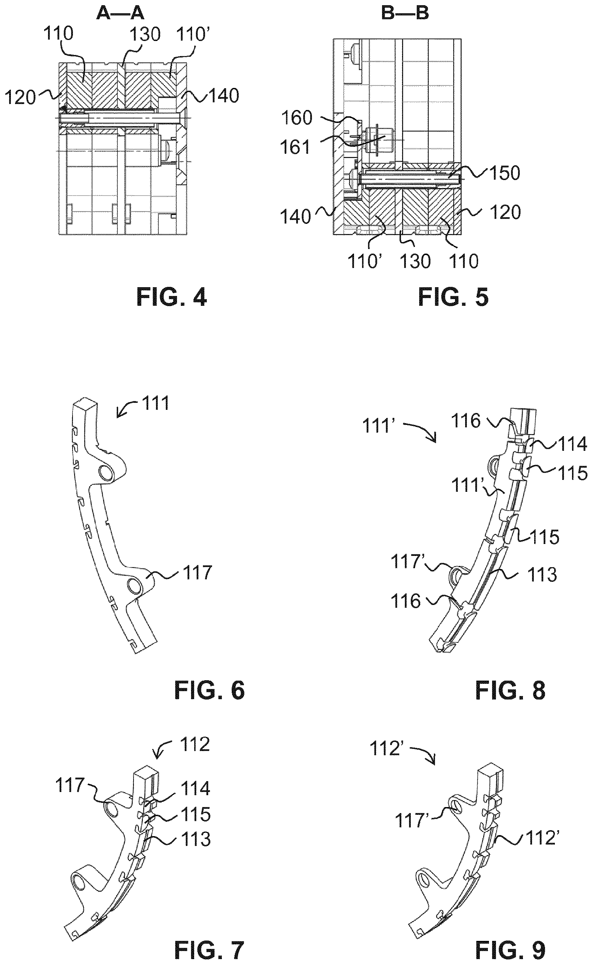

Each coil support 110, 110' is composed of sixteen coil support segments. Figures 6 and 7 illustrate two types of coil support segments 111, 112. Only these two types of coil support segments are required to assemble the first coil support 110. Each coil support segment 111, 112 extends over an angular range of 45° and carries an arrangement of slots 113 for receiving the wires of the coils, as well as one- and two-sided hook elements 114, 115 for deflecting the wires into loops and for holding the loops in place. Connecting slots 116 serve to connect the coils to connector 161. Each segment 111, 112 is provided with two holding lugs 117 disposed at an angular distance of 22.5° for mounting the segment to an axially adjacent segment, to the shielding ring 130 and to the bottom and top plates 120, 140. Each segment 111 of the first type forms a pair with a segment 112 of the second type, these segments being mirror-symmetric about a radial plane and being placed side by side along the longitudinal axis L. Two pairs, arranged mirror-symmetrically with respect to an axial plane, form a 90° sector of the coil support. The coil support is composed of four such identical sectors.

Two further coil support segments 111', 112', which are slight variants of the coil support segments 111, 112 of Figs. 6 and 7, are illustrated in Figs 8 and 9. The layout of the slots 113 and hook elements 114, 115 is the same as in the coil support segments 111, 112, and therefore the coil support segment 111' can be considered to be of the same type as the coil support segment 111, and the coil support segment 112' can be considered to be of the same type as the coil support segment 112. However, the coil support segments 111', 112' carry holding lugs 117' that are thinner with respect to the axial direction than the holding lugs 117 of the coil support segments 111, 112. As apparent from Fig. 5, these further coil support segments 111', 112' are used at one axial end of the second transducer 110' so as to accommodate the connector board 160 between the holding lugs 117' and the top plate 140.

Each coil support segment 111, 111', 112, 112' is made of an electrically insulating material. It can readily be manufactured by 3D printing or injection molding.

The bottom plate 120, the shielding ring 130, and the top plate 140 act as electromagnetic shielding members to shield the transducers 100, 100' from each other and from further components disposed axially adjacent to the transducer assembly. They are preferably made of a metal, in particular, aluminum.

Each of the first and second coils carried by the coil supports 110, 110' comprise a plurality of loops, the loops having increasing length along the circumferential direction. The loops are all parallel to the cylindrical outer surface of the coil supports 110, 110', which thus defines a common curved coil surface which defines a set of normal vectors N facing radially outside. The arrangement of the loops is schematically illustrated for one coil 170 in Fig. 10. The center of coil 170 is assumed to be at angular position 0°. In the present example, nine loops are present. The innermost first loop extends over an angular range from -11.5° to +11.5°, the second loop over an angular range from -23° to +23°, the third loop from -35.75° to +35.75°, and so on. In the present example, the turning positions (positions of inflection) of each loop are located at plus and minus the following angular positions: 11.5°, 23°, 35.75°, 47.25°, 54.25°, 67°, 72.75°, 82.5°, and 85.5°. For a coil with a different number of loops, the turning positions will generally be at different angular positions. At each turning position, the coil support has a hook element for forcing the wire of the coil into a 180° turn.

In Fig. 10 the loops are depicted as having different widths along the axial direction. However, in practice all loops will have essentially the same width, the wires of the loops being placed on top of each other or directly adjacent to each other in those loop portions that extend along the circumferential direction.

The arrangement of the coils on the coil support 110 is illustrated in a highly schematic manner in Fig. 11. Each transducer 100, 100' comprises two first coils 170, 172 arranged at an angular distance of 180°, the centers of these two coils being at positions 0° and 180°, and two identical second coils 171, 173, which are shifted with respect to the first coils by 90°, having their centers at 90° and 270°, and which overlap with the first coils. The loops of all coils 170-173 are arranged in or parallel to the cylindrical outer circumferential surface of the coil support 110, facing radially outside.

When an identical DC current is fed through all coils in the transducer, a particular distribution of flux density will result. The resulting flux density is illustrated in Fig. 12. This figure shows the dependence of flux density as a function of angular position for one of the first coils (designated as coil A) having its center at 0° and one of the second coils (designated as coil B) having its center at 90°. Also shown are the turning positions of the loops of these two coils. The flux density is shown only for a 90° sector. The flux density distribution in the remaining three sectors corresponds to the illustrated distribution after shifting and/or mirror inversion along the circumferential direction.

The flux density generated by coil A is zero outside the outermost conductor loop, at angles beyond 85.5°. Towards smaller angles, it increases stepwise to reach its maximum at the coil center around 0°, where all nine loops of the coil overlap. The angular dependence of the flux density of coil B is mirror-symmetric to the distribution of coil B, with the plane of symmetry located at the 45° position.

For AC currents, the flux density will have the same functional dependence on angle, but will be time dependent, causing EMFs to be induced in both coils. Both flux density and the induced EMFs can be readily modeled by standard FE methods. To a good approximation, the following simplified considerations can be made.

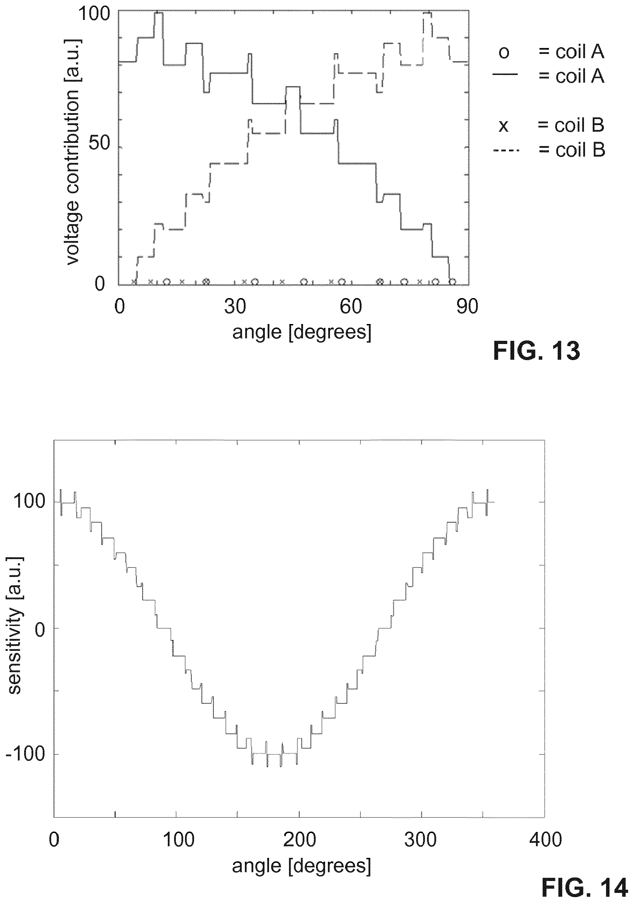

When both coils A and B are provided with the same AC current, the time-dependent flux densities of the coils simply add up. In each conductor loop of each coil, an EMF is induced whose magnitude is proportional to the magnitude of the total flux enclosed by this loop. The voltage that is induced in each coil is the sum of the EMFs induced in all loops of the coil, and the contribution of the EMFs induced in the individual loops to this voltage at a particular angular position is proportional to the magnitude of the local flux density times the number of overlapping loops at this angular position. This voltage contribution can thus be readily calculated for each angular position. The distribution of these voltage contributions as a function of angular position is illustrated in Fig. 13 in a 90° sector for coils A and B. Figure 14 illustrates the resulting distribution of voltage contributions over the entire angular range from 0° to 360° for the pair of oppositely arranged two first coils 170, 172, assuming that these coils are read out differentially.

If an electrically conducting body approaches the sensor at one particular angular position, eddy currents are induced in the body. The eddy currents damp the electromagnetic field and cause a counter EMF in the nearby conductors. Thereby, the eddy currents will reduce the voltage contribution at that particular angular position. The effect of the eddy currents on the total induced voltage in each coil (i.e., the sensitivity of the induced voltage to the presence of the conducting body) will thus depend on the angular position of the conducting body relative to that coil. The resulting sensitivity distribution just corresponds to the distribution of voltage contributions as illustrated in Fig. 14.

As is readily apparent from Fig. 14, the sensitivity distribution is sinusoidal over the entire circle from 0° to 360°, i.e., it can be well approximated by a cosine function over the entire circle, deviations from the cosine function being small. It is noted that the integral over the voltage/sensitivity distribution shown in Fig. 14 over the entire circle is zero, i.e., the sensitivity distribution does not exhibit an offset.

Similar considerations apply also if a magnetically highly permeable body approaches the sensor, and also for this case a sinusoidal dependence of the sensitivity of the induced voltage to the presence of the body as a function of angular position of the body results.

Now a target having perfect cylindrical symmetry rotating around the two first coils concentrically at constant distance will be considered. Due to the symmetric arrangement of the first coils relative to the target and due to their differential readout, the resulting transducer signal will be zero. If the target radially shifts away from one of the first coils towards the other first coil, the eddy currents in the target will cause a larger counter EMF in the coil that is closer to the target than in the other coil. Therefore, different voltages will be induced in the two coils, and as the coils are connected differentially, a net transducer signal will result. Also for a magnetically highly permeable target, a net transducer signal is obtained.

If, on the other hand, the target remains perfectly centered around the coils, but comprises a defect on its surface (e.g., a narrow notch), the eddy currents in the target will be modified by the defect. This will modify the induced voltage in the coil that is momentarily facing the defect according to the sensitivity distribution of that coil. If the defect moves along the circumference at constant angular velocity, the defect will thus create a transducer signal that varies in the same manner as a function of time as the variation of the sensitivity curve of Fig. 14 as a function of angle. The resulting transducer signal will therefore be sinusoidal as a function of time, the sinusoidal variation being synchronous with the rotation of the rotor. Again, also for a magnetically permeable target, a sinusoidal variation is obtained.

For any number of loops, it is readily possible to optimize the turning positions for each loop in view of sinusoidal sensitivity distribution by using the above-described approximation or by FE simulations. Due to the limited number of discrete loops, the sensitivity distribution may somewhat deviate from a perfect simple cosine dependence. In particular, the sensitivity distribution may exhibit step-like features, as apparent from Figs. 13 and 14, due to the presence of discrete loops. These step-like features can be further reduced by modifying the geometry of the individual loops, e.g., by configuring loops that have a width and/or a radial distance from the longitudinal axis that varies along the circumferential direction. In this manner an improved approximation of a simple cosine dependence can be obtained.

Since the sensitivity distribution is a periodic function of the angular position *φ*, the sensitivity distribution can be expressed as a Fourier expansion as follows: $S \left(ϕ\right) = {S}_{0} + {\sum }_{n = 1}^{∞} {S}_{n} cos \left[nϕ-{ϕ}_{n}\right]$ with real-valued coefficients *S*₀*, Sₙ* and with phases *φₙ*. Here, *S*₀ is the offset of the sensitivity distribution (which is preferably zero), *S*₁ and *φ*₁ are the amplitude and phase, respectively, of the cosine approximation, and the higher coefficients *Sₙ, φₙ* for *n* > 1 represent the amplitudes and phases for higher periodicities.

Even with optimized coil geometry, generally not all of the higher coefficients *Sₙ* for *n* > 1 will be zero. As a result, the transducer signal will have non-zero amplitude not only at the rotation frequency, but also at multiples of the rotation frequency.

Generally, these harmonics are unwanted and can be removed by employing lowpass or bandpass filters or by numerical rejection methods. Selected harmonics can additionally be taken into account when carrying out the optimization for the turning positions. For instance, if it is known that a rotor with nominal rotation frequency 100 Hz has a resonance near 400 Hz, the sensitivity distribution can be optimized such that the coefficient *S*₄ will be as low as possible. As another example, if the rotor consists of 16 rotor segments, disturbance signals at 16 times the rotation frequency can be expected. It is then possible to optimize the sensitivity distribution such that the coefficient *S*₁₆ will be as low as possible.

As outlined above, the first coils of the transducer enable the determination of rotor position (to be more precise, rotor displacement from the longitudinal axis) along one radial direction, say, the x axis. In very much the same manner, the second coils, which are shifted along the circumferential direction by 90°, can be employed for determining the rotor position along a second radial direction that is orthogonal to the first radial direction, i.e., along the y axis. It is to be noted that this is achieved by first and second coils that strongly overlap, i.e., the position signals along the two different directions can be obtained despite the fact that the first and second coils are strongly coupled.

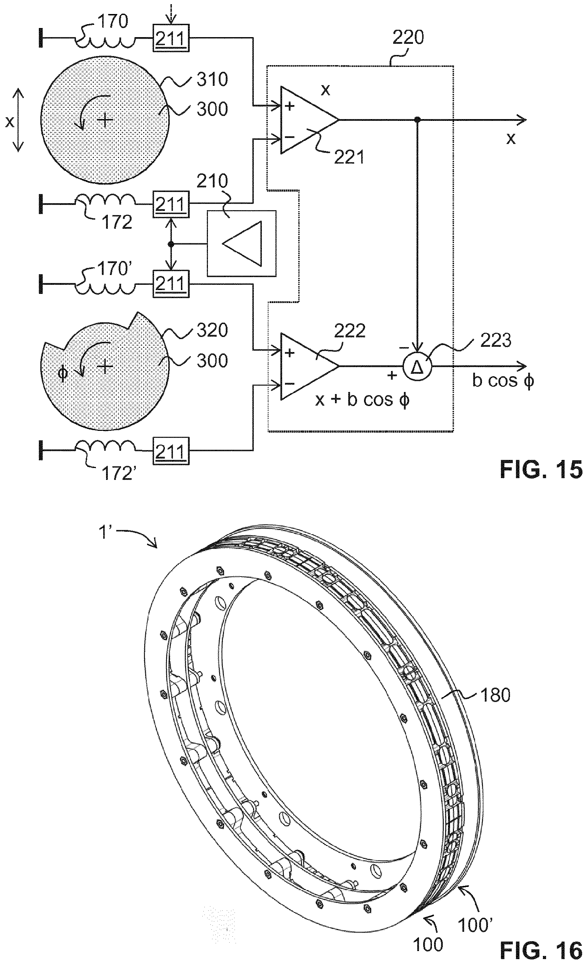

So far, only one of the two transducers 100, 100' of the transducer unit 1 has been considered. Figure 15 illustrates a possible application that employs both transducers. In this highly schematic diagram, the first coils of the first transducer 100 are designated by reference numerals 170 and 172, while the first coils of the second transducer 100' are designated by reference numerals 170' and 172'. The second coils of both transducers are disregarded for the moment. The transducers 100, 100' are employed to determine radial and angular positions of a rotor 300. For simplicity, rotor 300 is illustrated as an internal rotor, while it may as well be an external rotor. In fact, in the embodiment of Figs. 1-5, the rotor is an external rotor.

Excitation circuitry 210 excites identical AC currents in all coils 170, 172, 170', 172' through coupling networks 211 as they are known per se from the prior art. Detection circuitry 220 detects differential signals from each pair of coils 170, 172 and 170', 172', respectively. In Fig. 14, differential detection is symbolized by differential amplifiers 221, 222. However, it is to be understood that differential detection can be achieved also in other ways, e.g., by connecting the coils 170, 172 and 170', 172', respectively, of each transducer in anti-series to each other or in a bridge circuit with windings of an input or output transformer, as in WO 2015/052016 A1.

Coils 170, 172 of the first transducer 100 face a first target portion 310 of rotor 300. The first target portion 310 is rotationally symmetric. By being read out differentially, these coils detect a radial position of the rotor along a first direction (designated as x), as described in more detail above. Any defects of the first target portion 310 that lead to a deviation from perfect rotational symmetry manifest themselves as a sinusoidal, rotor-synchronous disturbance signal, which can readily be taken into account in subsequent evaluation of rotor position.

Coils 170', 172' of the second transducer 100' face a second target portion 320 of the rotor 300. This target portion is strongly eccentric, e.g., by having a pronounced notch in its surface. Therefore, as long as rotor 300 spins about the designated rotation axis that coincides with the longitudinal axis of the transducer unit 100, the second transducer 100' outputs a sinusoidal signal b cos *φ* that is indicative of angular position of the rotor 300, much in the same way as a traditional resolver. If rotor 300 is displaced along the x direction, this signal will be superimposed with a radial position signal very much like the radial position signal that is output by first transducer 100. By subtracting the x signal derived from the first transducer from the total signal derived from the second transducer, as symbolized by subtractor 223, only the sinusoidal angular signal b cos *φ* remains.

By using the second coils of the first and second transducers 100, 100', a second radial position signal along the orthogonal y direction and a second sinusoidal angular signal *b* sin *φ* can be obtained in the same manner. From the sinusoidal angular signals *b* cos *φ* and *b* sin *φ*, the rotation angle *φ* can be determined. Altogether, two radial position signals along two mutually orthogonal directions x and y as well as the rotation angle *φ* are obtained.

In order to obtain angular position signals that approximate a true cosine and sine function as well as possible, both the eccentric target geometry and the coil geometry can be optimized such that the convolution of the shape of the eccentric target and the sensitivity distribution matches a true cosine/sine function as well as possible. This optimization can be easily implemented because a convolution is a simple multiplication in the frequency domain. The Fourier expansions of both the target geometry and the sensitivity distribution will generally have non-zero coefficients at *n* > 1. It is then the optimization goal to maximize the Fourier coefficient of the convolution of both functions at *n* = 1 and to minimize all Fourier coefficients of the convolution at *n* > 1. This goal can be achieved by ensuring that for each *n* > 1 either the Fourier coefficient of the target geometry or the Fourier coefficient of the sensitivity distribution is zero or at least close to zero.

### Second embodiment

Figure 16 illustrates a transducer unit 1' according to a second embodiment of the present invention. The transducer unit 1' of the second embodiment is very similar to the transducer unit 1 of the first embodiment. However, the outer circumference of second transducer 100' is covered by an annular, metallic reference target 180 disposed at a fixed radial distance from the first and second coils of the second transducer 100'. In order to accommodate the reference target 180, the coil support of the second transducer has a slightly reduced outer diameter as compared to the coil support of the first transducer.

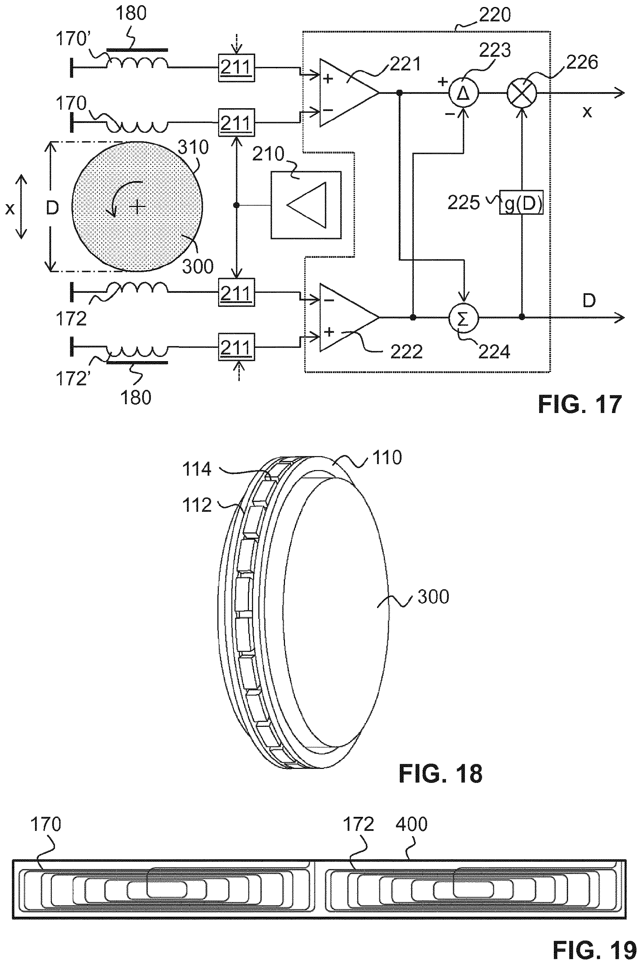

A possible application that employs the transducer unit 1' of the second embodiment is illustrated in a highly schematic manner in Fig. 17. Like components are designated with the same reference numerals as in Fig. 15. Again, rotor 300 is illustrated as an internal rotor for simplicity, while it may as well be an external rotor. In this embodiment, coil 170 of the first transducer and coil 170' of the second transducer are read out differentially. Likewise, coils 172 and 172' are read out differentially. Each such pair detects a differential signal that is indicative of the absolute distance between the target and the respective coil of the first transducer. By forming a difference of these signals (symbolized by subtractor 223), a radial position signal that is indicative of the displacement of the rotor along the x direction is obtained. By forming a sum (symbolized by adder 224), an output signal that is indicative of the diameter D of the target is obtained. The radial position signal can be further corrected for variations of rotor diameter by multiplying the uncorrected radial position signal with a variable gain *g* to obtain a corrected radial displacement signal x. In particular, a scaler 225 may receive the diameter value *D* and output a gain *g(D)* that depends on *D.* In a simple embodiment, a linear function *g(D)* is chosen as follows: *g*(*D*) = 1 + *k* · (*D* - *D*₀), where *D*₀ is the nominal value *of D* and *k* is an empirically determined constant factor. The uncorrected radial position signals are multiplied with this gain *g(D)* in multiplier 226 to obtain the corrected position signals.

The same detection and processing scheme can be applied to the signals obtained from the second coils of the first and second transducers 100, 100' to derive a (corrected) radial displacement signal y and a second diameter signal. The second diameter signal can be used to calibrate the processing circuitry by minimizing differences between the time-averaged diameter signals from the first and second coils. An average diameter value as measured by the first and second coils may be used in scaler 225.

Altogether, radial position signals along two mutually orthogonal directions x and y are obtained with high precision.

### Third embodiment

A transducer according to a third embodiment will be described with reference to Figure 18. While the first and second embodiments are designed to interact with an external rotor, the third embodiment is designed for an internal rotor.

Generally speaking, it is easier to implement the present invention for an external rotor. In this case, the coils interact radially outwardly with the target. The coils can be arranged in the slots from outside and will be held by the hooks of the coil support without any further measures. This is not the case when the transducer is designed to interact with an internal rotor. In this case, specific measures need to be taken to avoid that the coils fall inside and touch the internal rotor. It is therefore proposed to also mount the coils to a coil support from outside, similar to the first and second embodiments. The coils are then filled with resin, and the coil support is turned from the inside until only a thin membrane remains between the coils and the inner circumference of the coil support. A coil support 110 that is suited for this kind of mounting of the coils is schematically illustrated in Fig. 18, together with a portion of an internal rotor 300.

### Fourth embodiment

Instead of using discrete coils wound from insulated copper wire, it is possible to implement the coils on one or more flexible printed circuit boards (so-called flexprints). A flexprint 400 that implements two first coils 170, 172 of a single transducer is schematically illustrated in Fig. 19. It is to be understood that conductor portions that cross other conductor portions are arranged in different layers of the flexprint, as it is well known in the art. The flexprint is mounted on an electrically insulating annular carrier. Its length corresponds to the inner or outer circumference of the carrier, depending on whether an internal or external rotor is to be monitored. A second, slightly shorter or longer, but otherwise identical flexprint can be disposed on top of this, shifted by 90° along the circumferential direction, in order to implement the second coils.

It is noted that in the flexprint embodiment the individual loops of each coil generally have different widths along the axial direction. This can readily be taken into account when optimizing coil geometry.

### Further considerations

By employing detection coils that extend over a large range of the circumference of the rotor, the relationship between induced voltage and radial position is approximately linear, and generally no additional linearization is necessary. If, however, it is desired to improve linearity, interpolation using empirically determined lookup-tables, polynomials with empirically determined coefficients or other nonlinear functions can be used to carry out additional linearization.

While the invention has been described with reference to specific embodiments of the invention, it is to be understood that the invention is not limited to these embodiments, and that many modifications are possible without leaving the scope of the present invention, which is defined by the appended claims.

**LIST OF REFERENCE SIGNS**

| | | | |
|---|---|---|---|
| 100, 100' | transducer | 211 | coupling network |
| 110, 110' | coil support | 220 | processing circuitry |
| 111, 111' | coil support segment | 221 | first amplifier |
| 112, 112' | coil support segment | 222 | second amplifier |
| 113 | slot | 223 | subtractor |
| 114, 115 | hook portion | 224 | adder |
| 116 | connecting slot | 225 | scaler |
| 117 | lug | 226 | multiplier |
| 120 | bottom plate | 300 | rotor |
| 130 | shielding ring | 310 | first target portion |
| 140 | top plate | 320 | second target portion |
| 150 | screw | 400 | flexprint |
| 160 | connector board | | |
| 161 | connector | A-A | sectional plane |
| 170, 172 | first coil | B-B | sectional plane |
| 171, 173 | second coil | C | circumferential direction |
| 180 | dummy target | L | longitudinal axis |
| 210 | excitation circuitry | N | normal vector |

## Claims

1. A contactless electromagnetic sensor (1) for determining a radial position (x) of a rotor (300) configured for rotation about a longitudinal axis (L), the sensor (1) comprising:
a first transducer (100) comprising one or more first coils (170, 172);
excitation circuitry (210) connected to the first transducer (100) to energize the first transducer (100); and
processing circuitry (220) for receiving transducer signals from the first transducer (100) and for deriving at least one position signal indicative of a radial position (x) of the rotor (300) based on the transducer signals,
**characterized in that** the first coils (170, 172) have a sensitivity to a target material that varies sinusoidally along the circumferential direction (C).

2. The contactless electromagnetic sensor (1) of claim 1, wherein the first coils (170, 172) are arranged in or parallel to a curved coil surface that defines at least one normal vector (N) having a radial component with respect to the longitudinal axis (L).

3. The contactless electromagnetic sensor (1) of claim 1 or 2,
wherein the excitation circuitry (210) is configured to energize the first transducer (100) in such a manner that eddy currents are induced in a first target portion (310) of the rotor (300), and
wherein the processing circuitry (220) is configured to take an influence of the eddy currents onto the transducer signals into account when deriving the at least one position signal.

4. The contactless electromagnetic sensor of any one of the preceding claims, wherein the first transducer (100) further comprises one or more second coils (171, 173) having a sensitivity to a target material that varies sinusoidally along the circumferential direction (C), wherein the sensitivities of the first and second coils (170, 172; 171, 173) of the first transducer (100) vary with identical periodicity, but are shifted relative to each other along the circumferential direction (C), and wherein the processing circuitry (220) is configured to derive, from the transducer signals, position signals that are indicative of at least two radial positions (x, y) of the rotor (300) along at least two different radial directions.

5. The contactless electromagnetic sensor of claim 4, wherein the second coils (171, 173) of the first transducer (100) overlap with the first coils (170, 172) of the first transducer (100), and/or wherein the processing circuitry is configured to detect transducer signals originating from the first and second coils (170, 172; 171, 173) of the first transducer (100) at the same detection frequency.

6. The contactless electromagnetic sensor of any one of the preceding claims, further comprising a second transducer (100') arranged at a different axial position than the first transducer (100), the second transducer (100') comprising one or more coils having a sensitivity to a target material that varies sinusoidally, preferably with the same periodicity as the sensitivity of the first coils (170, 172) of the first transducer (100).

7. The contactless electromagnetic sensor of claim 6,
wherein the coils of the second transducer (100') are arranged to couple with a second target portion (320) of the rotor (300), the second target portion (320) being rotationally asymmetric, and
wherein the processing circuitry (220) is configured to receive transducer signals from the first and second transducers (100, 100') and, based on the transducer signals, to determine position signals indicative of at least one radial position (x) and an angular position (φ) of the rotor (300).

8. The contactless electromagnetic sensor of claim 6, further comprising a reference target (180) that is unaffected by the position of the rotor (300), wherein the coils of the second transducer are arranged to couple with said reference target (180).

9. The contactless electromagnetic sensor of claim 8, wherein the processing circuitry (220) is configured to receive transducer signals from the first and second transducers (100, 100') and, based on the transducer signals, to determine position signals that are indicative of at least one radial position (x) and diameter signals that are indicative of a diameter (D) of the rotor (300).

10. A transducer (100) for a contactless electromagnetic position sensor according to any one of the preceding claims, the transducer (100) comprising:
an annular coil support (110), the annular coil support (110) defining a longitudinal axis (L); and
one or more first coils (170, 172) mounted on the annular coil support (110),
wherein the first coils (170, 172) are arranged in or parallel to a curved coil surface that defines at least one normal vector (N) having a radial component with respect to the longitudinal axis (L), and
wherein the first coils (170) have a a sensitivity to a target material that varies sinusoidally along the circumferential direction (C).

11. The transducer (100) of claim 10, further comprising one or more second coils (171, 173) arranged on the annular coil support (110) in or parallel to the curved coil surface, the second coils (171, 173) having a a sensitivity to a target material that varies sinusoidally along the circumferential direction (C), wherein the sensitivities of the first and second coils (170, 172; 171, 173) vary with identical periodicity, but are shifted relative to each other along the circumferential direction (C).

12. The transducer (100) of claim 10 or 11, wherein the annular coil support (110) defines a plurality of slots (113) that are open towards an inner or outer circumference of the annular coil support (110), the first and second coils (170, 172; 171, 173) being formed of wires that are received in the slots (113).

13. The transducer of any one of claims 10-12, wherein the annular coil support (110) comprises a plurality of coil support segments (111, 112), each coil support segment (111, 112) extending over an angular range of 180° or less, preferably 90° or less, in particular 45°, and wherein at least two of the coil support segments (111, 112) are identical.

14. The transducer of claim 10 or 11, comprising a flexible printed circuit board (400), the first coils (170, 172) being formed as printed coils on said flexible printed circuit board (400).

15. A method of determining a radial position of a rotor, the method comprising:
providing a rotor (300) for rotation about a longitudinal axis (L), the rotor (300) comprising a target portion (310);
providing a transducer (100) comprising one or more coils (170, 172), the coils (170, 172) being arranged to couple with the target portion (310);
energizing the transducer (100) to create a dynamic electromagnetic field in the target portion (310);
receiving transducer signals from the transducer (100); and
deriving at least one position signal indicative of a radial position (x) of the rotor (300) based on the transducer signals,
**characterized in that** the coils (170, 172) have a sensitivity to a target material that varies sinusoidally along a circumferential direction (C).

## Patentansprüche

1. Berührungsloser elektromagnetischer Sensor (1) zum Bestimmen einer radialen Position (x) eines Rotors (300), der zu einer Drehung um eine Längsachse (L) ausgebildet ist, wobei der Sensor (1) umfasst:
einen ersten Wandler (100) mit einer oder mehreren ersten Spulen (170, 172);
eine Erregungsschaltung (210), die mit dem ersten Wandler (100) verbunden ist, um den ersten Wandler (100) zu erregen; und
eine Verarbeitungsschaltung (220) zum Empfangen von Wandlersignalen von dem ersten Wandler (100) und zum Ableiten mindestens eines Positionssignals, das eine radiale Position (x) des Rotors (300) angibt, auf der Grundlage der Wandlersignale,
**dadurch gekennzeichnet, dass** die ersten Spulen (170, 172) eine Empfindlichkeit gegenüber einem Targetmaterial aufweisen, die sinusförmig entlang der Umfangsrichtung (C) variiert.

2. Berührungsloser elektromagnetischer Sensor (1) nach Anspruch 1, wobei die ersten Spulen (170, 172) in oder parallel zu einer gekrümmten Spulenoberfläche angeordnet sind, die mindestens einen Normalenvektor (N) mit einer radialen Komponente in Bezug auf die Längsachse (L) definiert.

3. Berührungsloser elektromagnetischer Sensor (1) nach Anspruch 1 oder 2,
wobei die Anregungsschaltung (210) dazu ausgebildet ist, den ersten Wandler (100) derart zu erregen, dass Wirbelströme in einem ersten Targetbereich (310) des Rotors (300) induziert werden, und
wobei die Verarbeitungsschaltung (220) dazu ausgebildet ist, einen Einfluss der Wirbelströme auf die Wandlersignale bei der Ableitung des mindestens einen Positionssignals zu berücksichtigen.

4. Berührungsloser elektromagnetischer Sensor nach einem der vorstehenden Ansprüche, wobei der erste Wandler (100) ferner eine oder mehrere zweite Spulen (171, 173) mit einer Empfindlichkeit gegenüber einem Targetmaterial aufweist, die sinusförmig entlang der Umfangsrichtung (C) variiert, wobei die Empfindlichkeiten der ersten und zweiten Spulen (170, 172; 171, 173) des ersten Wandlers (100) mit identischer Periodizität variieren, aber relativ zueinander entlang der Umfangsrichtung (C) verschoben sind, und wobei die Verarbeitungsschaltung (220) dazu ausgebildet ist, aus den Wandlersignalen Positionssignale abzuleiten, die mindestens zwei radiale Positionen (x, y) des Rotors (300) entlang mindestens zwei verschiedenen radialen Richtungen angeben.

5. Berührungsloser elektromagnetischer Sensor nach Anspruch 4, wobei die zweiten Spulen (171, 173) des ersten Wandlers (100) mit den ersten Spulen (170, 172) des ersten Wandlers (100) überlappen und/oder wobei die Verarbeitungsschaltung dazu ausgebildet ist, Wandlersignale, die von den ersten und zweiten Spulen (170, 172; 171, 173) des ersten Wandlers (100) stammen, bei der gleichen Erfassungsfrequenz zu erfassen.

6. Berührungsloser elektromagnetischer Sensor nach einem der vorstehenden Ansprüche, der ferner einen zweiten Wandler (100') aufweist, der in einer anderen axialen Position als der erste Wandler (100) angeordnet ist, wobei der zweite Wandler (100') eine oder mehrere Spulen mit einer Empfindlichkeit gegenüber einem Targetmaterial aufweist, die sinusförmig variiert, vorzugsweise mit der gleichen Periodizität wie die Empfindlichkeit der ersten Spulen (170, 172) des ersten Wandlers (100).

7. Berührungsloser elektromagnetische Sensor nach Anspruch 6,
wobei die Spulen des zweiten Wandlers (100') so angeordnet sind, dass sie mit einem zweiten Targetbereich (320) des Rotors (300) koppeln, wobei der zweite Targetbereich (320) asymmetrisch bezüglich einer Rotation ist, und
wobei die Verarbeitungsschaltung (220) dazu ausgebildet ist, Wandlersignale von dem ersten und dem zweiten Wandler (100, 100') zu empfangen und, basierend auf den Wandlersignalen, Positionssignale zu bestimmen, die mindestens eine radiale Position (x) und eine Winkelposition (φ) des Rotors (300) angeben.

8. Berührungsloser elektromagnetischer Sensor nach Anspruch 6, der ferner ein Referenztarget (180) umfasst, das von der Position des Rotors (300) unbeeinflusst ist, wobei die Spulen des zweiten Wandlers so angeordnet sind, dass sie mit dem Referenztarget (180) koppeln.

9. Berührungsloser elektromagnetischer Sensor nach Anspruch 8, wobei die Verarbeitungsschaltung (220) dazu ausgebildet ist, Wandlersignale von dem ersten und zweiten Wandler (100, 100') zu empfangen und auf der Grundlage der Wandlersignale Positionssignale, die mindestens eine radiale Position (x) angeben, und Durchmessersignale, die einen Durchmesser (D) des Rotors (300) angeben, zu bestimmen.

10. Wandler (100) für einen berührungslosen elektromagnetischen Positionssensor nach einem der vorstehenden Ansprüche, wobei der Wandler (100) umfasst:
einen ringförmigen Spulenträger (110), wobei der ringförmige Spulenträger (110) eine Längsachse (L) definiert; und
eine oder mehrere erste Spulen (170, 172), die auf dem ringförmigen Spulenträger (110) angebracht sind,
wobei die ersten Spulen (170, 172) in oder parallel zu einer gekrümmten Spulenoberfläche angeordnet sind, die mindestens einen Normalenvektor (N) mit einer radialen Komponente in Bezug auf die Längsachse (L) definiert, und
wobei die ersten Spulen (170) eine Empfindlichkeit gegenüber einem Targetmaterial aufweisen, die sinusförmig entlang der Umfangsrichtung (C) variiert.

11. Wandler (100) nach Anspruch 10, ferner mit einer oder mehreren zweiten Spulen (171, 173), die auf dem ringförmigen Spulenträger (110) in oder parallel zu der gekrümmten Spulenoberfläche angeordnet sind, wobei die zweiten Spulen (171, 173) eine Empfindlichkeit gegenüber einem Targetmaterial aufweisen, die sinusförmig entlang der Umfangsrichtung (C) variiert, wobei die Empfindlichkeiten der ersten und zweiten Spulen (170, 172; 171, 173) mit identischer Periodizität variieren, aber relativ zueinander entlang der Umfangsrichtung (C) verschoben sind.

12. Wandler (100) nach Anspruch 10 oder 11, wobei der ringförmige Spulenträger (110) eine Vielzahl von Schlitzen (113) definiert, die zu einem inneren oder äusseren Umfang des ringförmigen Spulenträgers (110) hin offen sind, wobei die ersten und zweiten Spulen (170, 172; 171, 173) aus Drähten gebildet sind, die in den Schlitzen (113) aufgenommen werden.

13. Wandler nach einem der Ansprüche 10-12, wobei der ringförmige Spulenträger (110) eine Mehrzahl von Spulenträgersegmenten (111, 112) umfasst, wobei sich jedes Spulenträgersegment (111, 112) über einen Winkelbereich von 180° oder weniger, vorzugsweise 90° oder weniger, insbesondere 45°, erstreckt, und wobei mindestens zwei der Spulenträgersegmente (111, 112) identisch sind.

14. Wandler nach Anspruch 10 oder 11, umfassend eine flexible gedruckte Leiterplatte (400), wobei die ersten Spulen (170, 172) als gedruckte Spulen auf der flexiblen gedruckten Leiterplatte (400) ausgebildet sind.

15. Verfahren zur Bestimmung einer radialen Position eines Rotors, wobei das Verfahren umfasst:
Bereitstellen eines Rotors (300) zur Drehung um eine Längsachse (L), wobei der Rotor (300) einen Targetbereich (310) umfasst;
Bereitstellen eines Wandlers (100) mit einer oder mehreren Spulen (170, 172), wobei die Spulen (170, 172) derart angeordnet sind, dass sie mit dem Targetbereich (310) koppeln;
Erregung des Wandlers (100) zur Erzeugung eines dynamischen elektromagnetischen Feldes im Targetbereich (310);
Empfangen von Wandlersignalen vom Wandler (100); und
Ableiten mindestens eines Positionssignals, das eine radiale Position (x) des Rotors (300) angibt, auf der Grundlage der Wandlersignale,
**dadurch gekennzeichnet, dass** die Spulen (170, 172) eine Empfindlichkeit gegenüber einem Targetmaterial aufweisen, die sinusförmig entlang einer Umfangsrichtung (C) variiert.

## Revendications

1. Un capteur électromagnétique sans contact (1) pour déterminer une position radiale (x) d'un rotor (300) configuré pour une rotation atour d'un axe longitudinal (L), le capteur (1) comprenant:
un premier transducteur (100) comprenant une ou plusieurs bobines (170, 172);
un circuit d'excitation (210) connecté au premier transducteur (100) afin d'exciter le premier transducteur (100); et
un circuit de traitement (220) pour recevoir des signaux de transducteur du premier transducteur (100) et pour dériver au moins un signal de position indicatif d'une position radiale (x) du rotor (300) sur la base des signaux de transducteur,
**caractérisé en ce que** les premières bobines (170, 172) présentent une sensibilité à un matériau cible qui varie de manière sinusoïdale le long de la direction circonférentielle (C).

2. Le capteur électromagnétique sans contact (1) selon la revendication 1, dans lequel les premières bobines (170, 172) sont agencées dans ou parallèlement à une surface de bobine courbe qui définit au moins un vecteur normal (N) ayant une composante radiale par rapport à l'axe longitudinal (L).

3. Le capteur électromagnétique sans contact (1) selon la revendication 1 ou 2,
dans lequel le circuit d'excitation (210) est configuré pour exciter le premier transducteur (100) de telle manière que des courants de Foucault sont induits dans une première partie cible (310) du rotor (300), et
dans lequel le circuit de traitement (220) est configuré pour prendre en compte une influence des courants de Foucault sur les signaux de transducteur lors de la dérivation de l'au moins un signal de position.

4. Le capteur électromagnétique sans contact selon l'une quelconque des revendications précédentes, dans lequel le premier transducteur (100) comprend en outre une ou plusieurs secondes bobines (171, 173) ayant une sensibilité à un matériau cible qui varie de manière sinusoïdale le long de la direction circonférentielle (C), dans lequel les sensibilités des première et seconde bobines (170, 172; 171, 173) du premier transducteur (100) varient avec une périodicité identique, mais sont décalées l'une par rapport à l'autre le long de la direction circonférentielle (C), et dans lequel les circuits de traitement (220) est configuré pour dériver, à partir des signaux du transducteur, des signaux de position qui sont indicatifs d'au moins deux positions radiales (x, y) du rotor (300) le long d'au moins deux directions radiales différentes.

5. Le capteur électromagnétique sans contact selon la revendication 4, dans lequel les secondes bobines (171, 173) du premier transducteur (100) chevauchent les premières bobines (170, 172) du premier transducteur (100), et / ou dans lequel le circuit de traitement est configuré pour détecter des signaux de transducteur provenant des première et seconde bobines (170, 172; 171, 173) du premier transducteur (100) à la même fréquence de détection.

6. Le capteur électromagnétique sans contact selon l'une quelconque des revendications précédentes, comprenant en outre un deuxième transducteur (100') agencé à une position axiale différente de celle du premier transducteur (100), le deuxième transducteur (100') comprenant une ou plusieurs bobines ayant une sensibilité à un matériau cible qui varie de manière sinusoïdale, de préférence avec la même périodicité que la sensibilité des premières bobines (170, 172) du premier transducteur (100).

7. Le capteur électromagnétique sans contact selon la revendication 6,
dans lequel les bobines du second transducteur (100') sont agencées pour se coupler avec une seconde partie cible (320) du rotor (300), la seconde partie cible (320) étant asymétrique en rotation, et
dans lequel le circuit de traitement (220) est configuré pour recevoir des signaux de transducteur des premier et second transducteurs (100, 100') et, sur la base des signaux de transducteur, pour déterminer des signaux de position indicatifs d'au moins une position radiale (x) et d'une position angulaire (ϕ) du rotor (300).

8. Le capteur électromagnétique sans contact selon la revendication 6, comprenant en outre une cible de référence (180) qui n'est pas affectée par la position du rotor (300), dans lequel les bobines du second transducteur sont agencées pour se coupler avec ladite cible de référence (180).

9. Le capteur électromagnétique sans contact selon la revendication 8, dans lequel le circuit de traitement (220) est configuré pour recevoir des signaux de transducteur des premier et second transducteurs (100, 100') et, sur la base des signaux de transducteur, pour déterminer des signaux de position qui sont indicatifs d'au moins une position radiale (x) et des signaux de diamètre qui sont indicatifs d'un diamètre (D) du rotor (300).

10. Un transducteur (100) pour un capteur de position électromagnétique sans contact selon l'une quelconque des revendications précédentes, le transducteur (100) comprenant:
un support de bobine annulaire (110), le support de bobine annulaire (110) définissant un axe longitudinal (L); et
une ou plusieurs premières bobines (170, 172) montées sur le support de bobine annulaire (110),
dans lequel les premières bobines (170, 172) sont agencées dans ou parallèlement à une surface de bobine courbe qui définit au moins un vecteur normal (N) ayant une composante radiale par rapport à l'axe longitudinal (L), et
dans lequel les premières bobines (170) ont une sensibilité à un matériau cible qui varie de manière sinusoïdale le long de la direction circonférentielle (C).

11. Le transducteur (100) selon la revendication 10, comprenant en outre une ou plusieurs secondes bobines (171, 173) disposées sur le support de bobine annulaire (110) dans ou parallèlement à la surface de bobine courbe, les secondes bobines (171, 173) ayant une sensibilité à un matériau cible qui varie de manière sinusoïdale le long de la direction circonférentielle (C), dans lequel les sensibilités des première et seconde bobines (170, 172; 171, 173) varient avec une périodicité identique, mais sont décalées l'une par rapport à l'autre le long de la direction circonférentielle (C).

12. Le transducteur (100) selon la revendication 10 ou 11, dans lequel le support de bobine annulaire (110) définit une pluralité de fentes (113) qui sont ouvertes vers une circonférence interne ou externe du support de bobine annulaire (110), les première et seconde bobines (170, 172; 171, 173) étant formées de fils qui sont reçus dans les fentes (113).

13. Le transducteur selon l'une quelconque des revendications 10 à 12, dans lequel le support de bobine annulaire (110) comprend une pluralité de segments de support de bobine (111, 112), chaque segment de support de bobine (111, 112) s'étendant sur une plage angulaire de 180 ° ou moins, de préférence 90 ° ou moins, en particulier 45 °, et dans lequel au moins deux des segments de support de bobine (111, 112) sont identiques.

14. Le transducteur selon la revendication 10 ou 11, comprenant une carte de circuit imprimé flexible (400), les premières bobines (170, 172) étant formées sous forme de bobines imprimées sur ladite carte de circuit imprimé flexible (400).

15. Un procédé de détermination d'une position radiale d'un rotor, le procédé comprenant:
fournir un rotor (300) pour une rotation autour d'un axe longitudinal (L), le rotor (300) comprenant une partie cible (310);
fournir un transducteur (100) comprenant une ou plusieurs bobines (170, 172), les bobines (170, 172) étant agencées pour se coupler avec la partie cible (310);
exciter le transducteur (100) pour créer un champ électromagnétique dynamique dans la partie cible (310);
recevoir des signaux de transducteur du transducteur (100); et
dériver au moins un signal de position indicatif d'une position radiale (x) du rotor (300) sur la base des signaux de transducteur,
**caractérisé en ce que**
les bobines (170, 172) ont une sensibilité à un matériau cible qui varie de manière sinusoïdale le long d'une direction circonférentielle (C).
